# EUROPÄISCHE PATENTSCHRIFT

(11) **EP 3 372 500 B1**
(45) Veröffentlichungstag und Bekanntmachung des Hinweises auf die Patenterteilung: **03.07.2019**
(21) Anmeldenummer: 18160099.0
(22) Anmeldetag: 06.03.2018
(51) Int. Cl.: B64C 39/02, B64D 1/10, B64D 1/12

(54) **TRANSPORTVORRICHTUNG**
TRANSPORT DEVICE
DISPOSITIF DE TRANSPORT

(30) Priorität: 07.03.2017 DE 102017104707
(43) Veröffentlichungstag der Anmeldung: 12.09.2018
(73) Patentinhaber: Deutsche Post AG, 53113 Bonn (DE)
(72) Erfinder: Bellof, Marco, 52070 Aachen (DE); Orth, Felix, 52066 Aachen (DE); Sommer, Martin, 52080 Aachen (DE)
(74) Vertreter: Michalski Hüttermann & Partner Patentanwälte mbB

(56) Entgegenhaltungen:
- DE-U1-202015 105 415
- KR-B1- 101 682 573
- KR-B1- 101 682 574
- US-B1- 9 174 733

## Beschreibung

### Technisches Gebiet

Die Erfindung betrifft eine flugfähige, unbemannte Transportvorrichtung mit einem Nutzlastbehälter für wenigstens eine Sendung, wobei an einer Unterseite der Transportvorrichtung der Nutzlastbehälter anbringbar ist. Zudem betrifft die Erfindung einen Aufnahmebehälter mit der Transportvorrichtung und ein Verfahren zum Beladen einer auf dem Aufnahmebehälter gelandeten, flugfähigen unbemannten Transportvorrichtung mit dem Nutzlastbehälter für die Sendung.

### Hintergrund der Erfindung

Infolge steigenden Güterverkehrs durch Stück- und Sammelgutfahrten, LKW- oder Containertransporte, See- oder Luftfrachtpakettransporte im Rahmen von e-Commerce und Online-Versandhandelsangeboten hat sich die Anzahl von Transportgütern und insbesondere von Paketsendungen und Sendungen signifikant erhöht. Zwar ist es heutzutage möglich, dass eine Bestellung unabhängig von herkömmlichen Ladenöffnungszeiten Online getätigt werden kann. Die Lieferung der Bestellung als Sendung an den Empfänger erfolgt jedoch fast ausschließlich mittels klassischer Zustellverfahren, beispielsweise durch Briefträger oder im Falle von Paketsendungen durch motorisierte Zustellfahrzeuge und im Wesentlichen nur innerhalb der Ladenöffnungszeiten.

Ist der Empfänger bei Lieferung nicht anzutreffen, beispielsweise weil er als Berufstätiger innerhalb der Ladenöffnungszeiten seiner Arbeit nachgeht, wird entweder versucht, die Sendung ein weiteres Mal zuzustellen oder die Sendung wird in einer Filiale des Zustellunternehmens zur Abholung durch den Empfänger hinterlegt. Zwar besteht seit einiger Zeit die Möglichkeit, Sendungen an einem Sammelpunkt zu hinterlegen, beispielsweise in einer Packstation, allerdings sind derartige Sammelpunkte noch nicht flächendeckend verfügbar und somit nicht in jedem Fall eine Alternative.

In jüngster Zeit sind daher vermehrt Versuche unternommen worden, Sendungen mittels unbemannter, flugfähiger Transportvorrichtungen, auch Paketkopter oder Drohne genannt, an den Empfänger oder den Sammelpunkt zu liefern. Bei diesen Versuchen wird regelmäßig ein Aufnahmebehälter zum Aufnehmen der Sendung verwendet, an den bzw. von dem die Transportvorrichtung die Sendung überbringen bzw. abholen kann. Ein solcher Aufnahmebehälter kann im Vorgarten eines Hauses des Empfängers aufgestellt ist oder für einen Stadtbezirk für eine Mehrzahl Empfänger als Sammelpunkt vorgesehen sein und erlaubt einen Zugriff auf die Sendung auch außerhalb der Ladenöffnungszeiten. Bei den vorgenannten Versuchen hat sich die eigentliche Übergabe der Sendung zwischen der unbemannten Transportvorrichtung und dem Aufnahmebehälter als besonders schwierig erwiesen. Beispielsweise ist ein "Abwerfen" der Sendung von der Transportvorrichtung auf den Aufnahmebehälter nicht möglich, wenn zerbrechliche Sendungen transportiert werden. Daher wurden Greifvorrichtungen getestet, die jedoch nicht alle Arten von Sendungen sicher halten können. Ein Aufnehmen verschiedener Sendungen in undefinierter Pose ist für eine Greifvorrichtung schwer umzusetzen. Greifvorrichtungen dieser oder ähnlicher Art, die Nutzlasten bzw. Nutzlastträger oder daran befestigte Hilfsmittel umgreifen, sind z.B. aus den Dokumenten DE 202015105415 U1, US9174733, KR101682573 und KR101682574 bekannt. Alternativ oder zusätzlich verwendete austauschbare Transportboxen benötigen viele Aktoren für das Öffnen der Boxen sowie Be- und Entladen von Sendungen, und sind insofern auch nicht praktikabel und zudem kostenintensiv.

### Beschreibung der Erfindung

Ausgehend von dieser Situation ist es eine Aufgabe der Erfindung, eine flugfähige, unbemannte Transportvorrichtung mit einem Nutzlastbehälter anzugeben, der in besonders einfacher Weise an einen Aufnahmebehälter übergebbar ist.

Die Aufgabe wird durch die Merkmale der unabhängigen Ansprüche gelöst. Vorteilhafte Ausgestaltungen sind in den Unteransprüchen angegeben.

Demnach wird die Aufgabe durch eine flugfähige, unbemannte Transportvorrichtung mit einem Nutzlastbehälter für wenigstens eine Sendung gelöst, wobei die Transportvorrichtung an ihrer Unterseite wenigstens zwei gegenüberliegend angeordnete, jeweils mit einer Federkraft beaufschlagte Rastarme aufweist, der Nutzlastbehälter an seiner Innenseite wenigstens zwei gegenüberliegend angeordnete, aufeinander zu gerichtete erste Rastnasen aufweist und die Rastarme korrespondierend zu den wenigstens zwei ersten Rastnasen wenigstens zwei gegenüberliegend angeordnete, voneinander weg gerichtete zweite Rastnasen aufweisen, so dass der Nutzlastbehälter mittels der der Rastarme an der Transportvorrichtung anrastbar ist und durch Zusammendrücken der Rastarme der Nutzlastbehälter von der Transportvorrichtung lösbar ist. Die Erfindung betrifft zudem eine flugfähige, unbemannte Transportvorrichtung mit einem Nutzlastbehälter für wenigstens eine Sendung, wobei die Transportvorrichtung an ihrer Unterseite wenigstens zwei gegenüberliegend angeordnete, jeweils mit einer Federkraft beaufschlagte Rastarme aufweist, durch welche der Nutzlastbehälter derart an der Transportvorrichtung anrastbar ist, dass durch Zusammendrücken der Rastarme der Nutzlastbehälter von der Transportvorrichtung lösbar ist.

Ein wesentlicher Aspekt der Erfindung liegt in einer einfachen Verrastung des Nutzlastbehälters an den Rastarmen der Transportvorrichtung. In einem verrasteten Zustand ist der Nutzlastbehälter mit der Transportvorrichtung fest verbunden, so dass eine oder mehrere in dem Nutzlastbehälter vorgesehene Sendungen durch die Transportvorrichtung von einem Sender sicher zu einem Empfänger transportiert werden können, beispielsweise hin zu einem Aufnahmebehälter. Durch das Zusammendrücken verformen sich die Rastarme zueinander hin und lösen die Verrastung zwischen Nutzlastbehälter und Transportvorrichtung, um den Nutzlastbehälter in einfacher Weise von der Transportvorrichtung zu entnehmen. Ebenso kann der Nutzlastbehälter bei zusammengedrückten Rastarmen an die Transportvorrichtung herangeführt werden und nach Freigeben der Rastarme mit diesen verrasten. Die Federkraft bewirkt, dass die Rastarme im unverrasteten Zustand in eine Normalposition einnehmen und beim Verformen zurück in diese Normalposition streben. Die Federkraft wirkt zudem einem ungewollten Lösen des Nutzlastbehälters von der Transportvorrichtung entgegen.

Bevorzugt erstrecken sich die Rastarme in der Normalposition, bei auf einer Ebene gelandeter Transportvorrichtung, senkrecht von der Transportvorrichtung weg Richtung Boden. Sofern nicht anders beschrieben, wird im Weiteren davon ausgegangen, dass die Transportvorrichtung auf einer Ebene gelandet ist und sich die Unterseite der Transportvorrichtung horizontal und parallel zu der Ebene erstreckt. Die Rastarme können sich flächig von der Transportvorrichtung weg erstrecken, beispielsweise eine rechteckartige Form aufweisen. Ebenso können gegenüberliegend jeweils eine Mehrzahl einzelner, jeweils beabstandeter und/oder gegenüberliegender Rastarme vorgesehen sein. Im Querschnitt bilden die beiden Rastarme mit der Unterseite vorzugsweise ein Profil nach Art eines umgedrehten U. Beim Transport kann die Sendung an ihrer Oberseite durch die Unterseite der Transportvorrichtung, an ihrer Unterseite durch den Nutzlastbehälter und an ihren Seiten durch die Rastarme und/oder den Nutzlastbehälter insbesondere vollständig begrenzt sein.

Der Nutzlastbehälter und/oder die Transportvorrichtung sind bevorzugt ausgestaltet, dass, wenn der Nutzlastbehälter mit der Transportvorrichtung verrastet ist, die in dem Nutzlastbehälter vorgesehene Sendung gegen äußere Witterungseinflüsse wie Feuchtigkeit geschützt ist. Bei mit der Transportvorrichtung verrasteten Nutzlastbehälter ist die in dem Nutzlastbehälter angeordnete Sendung an ihren Seiten vorzugsweise zum Teil durch die Rastarme umgrenzt, insbesondere wenn die Sendung in ihrer Höhe den Nutzlastbehälter überragt. Das Zusammendrücken der Rastarme kann manuell erfolgen, vorzugsweise durch gleichzeitiges beidseitiges Zusammendrücken der gegenüberliegend angeordneten Rastarme vorteilhaft an einer Position der Rastarme, die möglichst weit von einer Oberseite der Transportvorrichtung entfernt ist.

Die unbemannte Transportvorrichtung ist vorzugsweise als Fluggerät, als unbemanntes Luftfahrzeug, Englisch als unmanned, uninhabited oder unpiloted aerial vehicle, abgekürzt UAV, als Paketkopter oder als Drohne ausgestaltet. Mögliche Ausprägungsformen der Transportvorrichtung umfassen Helikopter, Multikopter, Quadrokopter oder Tiltwing umfassen. Die Sendung ist beispielsweise eine Postsendung, ein Paket, ein Einschreiben, ein Brief oder sonstiges transportables Gut.

Nach einer bevorzugten Weiterbildung weist der Nutzlastbehälter an seiner Innenseite wenigstens zwei gegenüberliegend angeordnete, aufeinander zu gerichtete erste Rastnasen auf und die Rastarme weisen korrespondierend zu den wenigstens zwei ersten Rastnasen wenigstens zwei gegenüberliegend angeordnete, voneinander weg gerichtete zweite Rastnasen auf. Durch Einsetzen des Nutzlastbehälters in die Transportvorrichtung rasten die ersten Rastnasen in die zweiten Rastnasen ein. Durch Zusammendrücken der Rastarme werden die zweiten Rastnasen aus den ersten Rastnasen ausgerastet. Die zweiten Rastnasen sind bevorzugt in einem Endbereich der Rastarme entfernt von der Unterseite der Transportvorrichtung vorgesehen. Die Rastnasen können als Hinterschnitte oder sonstige aus dem Stand der Technik bekannte Rasteinrichtungen ausgestaltet sein.

Nach einer bevorzugten Weiterbildung weist der Nutzlastbehälter eine umlaufende Seitenwand auf, wobei die ersten Rastnasen innenseitig an der Seitenwand angeordnet sind. Bevorzugt sind die ersten Rastnasen beabstandet von einem Boden des Nutzlastbehälters an einem Randbereich der Seitenwand angeordnet. Der Nutzlastbehälter kann wannenartig ausgestaltet sein und/oder im Schnitt ein U-förmiges Profil aufweisen, wie später weiter erläutert ist. Bevorzugt umgreift der Nutzlastbehälter im verrasteten Zustand mit seinen Innenseiten der Seitenwand die Rastarme wenigstens teilweise überlappend.

Nach einer noch weiteren bevorzugten Ausführungsform sind die Rastarme und der Nutzlastbehälter ausgeführt, miteinander form- und/oder kraftschlüssig zu verrasten. Sofern Rastnasen vorgesehen sind, sind die Rastnasen bevorzugt ausgeführt, form- und/oder kraftschlüssig miteinander zu verrasten. Der Kraftschluss kann durch die Federkraft unterstützt und/oder bewirkt sein, welche einem Entrasten der mit dem Nutzlastbehälters verrasteten Rastarmen entgegenwirken kann.

Wie zuvor ausgeführt, kann das Zusammendrücken der Rastarme in einfacher Weise durch manuelles Betätigen der Rastarme erfolgen. Nach einer besonders bevorzugten Weiterbildung ist an den Rastarmen jeweils ein Eingriff vorgesehen, wobei die Eingriffe gegenüberliegend zueinander an den Rastarmen angeordnet sind und sich voneinander weg erstrecken. Entsprechend lässt sich das Zusammendrücken der Rastarme besonders einfach durch Betätigen der Eingriffe bewerkstelligen, sei es manuell oder durch eine Einrichtung, wie eine nachfolgend beschriebene Verschiebeeinrichtung. Der Eingriff ist beispielsweise als Einkerbung gestaltet, bevorzugt an jedem Rastarm vorgesehen und/oder entfernt und gegenüberliegend zu der Unterseite vorgesehen.

Um die Sendung während des Transports zu sichern, ist nach einer bevorzugten Weiterbildung zwischen den Rastarmen eine spannbare Fixierungseinrichtung vorgesehen, welche angeordnet und eingerichtet ist, beim Einsetzen des mit der Sendung beladenen Nutzlastbehälters in die Transportvorrichtung die Sendung zwischen Nutzlastbehälter und Fixierungseinrichtung zu fixieren. Die Fixierungseinrichtung ist bevorzugt an beiden Rastarmen oder über eine separate Haltevorrichtung direkt an der Transportvorrichtung befestigt, insbesondere jeweils gegenüberliegend zu den zweiten Rastnasen in einem Endbereich der Rastarme entfernt und gegenüberliegend zu der Unterseite. Sofern kein Nutzlastbehälter in die Transportvorrichtung eingesetzt ist, ist die Fixierungseinrichtung bevorzugt ungespannt und/oder weist eine Vorspannung auf, so dass die Fixierungseinrichtung nicht zwischen den Rastarmen durchhängt. Durch das Einsetzen wird die Fixierungseinrichtung bevorzugt derart gespannt, dass durch die Spannkraft die Sendung gegen Verrutschen in dem Nutzlastbehälter gesichert ist, insbesondere gegen den Nutzlastbehälter gepresst wird. Als zusätzlicher Schutz gegen Verrutschen kann der Nutzlastbehälter mit einer Gummierung versehen sein. Die Fixierung der Sendung wird bevorzugt durch Entfernen des Nutzlastbehälters von der Transportvorrichtung aufgehoben.

In diesem Zusammenhang ist besonders bevorzugt, dass die Fixierungseinrichtung als Netz, als Gepäcknetz, als Plane, als Gummifolie und/oder als Gummiband ausgeführt ist und/oder der Nutzlastbehälter als Ladeschale oder Transportschale ausgeführt ist, in welche die Sendung einsetzbar ist. Der Nutzlastbehälter ist bevorzugt aus Kunststoff oder einem Faserverbundmaterial gewichtsreduziert gestaltet. Die Fixierungseinrichtung kann sich über eine rechteckartige Fläche erstrecken, deren Ecken an den Rastarmen befestigt sind. Die Fläche der Fixierungseinrichtung ist bevorzugt größer als die Fläche der Oberseiten der in dem Nutzlastbehälter transportierten Sendungen.

Die Aufgabe der Erfindung ist weiterhin durch einen Aufnahmebehälter für eine Transportvorrichtung gelöst, mit der Transportvorrichtung wie zuvor beschrieben, wobei der Aufnahmebehälter eine Positionierungseinrichtung aufweist, welche eingerichtet ist, die an dem Aufnahmebehälter gelandete Transportvorrichtung zunächst in eine Beladeposition zu verschieben und daraufhin wenigstens einen der Rastarme zusammenzudrücken und/oder die Rastarme aus einer zusammengedrückten Position in eine Normalposition zu überführen, in der die Positionierungseinrichtung nicht mehr an der Transportvorrichtung angreift.

Die Positionierungseinrichtung ermöglicht derart eine Längs- und/oder Querführung der auf dem Aufnahmebehälter gelandeten Transportvorrichtung, um die Transportvorrichtung in der Beladeposition zu positionieren. Der Aufnahmebehälter kann als Briefkasten, Paketkasten, Paketbriefkasten und/oder Packstation ausgestaltet sein oder mobil als Lieferwagen, LKW, Wechselbrücke oder Schiff ausgeführt sein. Die Positionierungseinrichtung ist bevorzugt elektromechanisch angetrieben und kann zwei entgegengesetzt angeordnete Schiebeorgane umfassen, die beidseitig in die Eingriffe der Rastarme eingreifen, um derart die auf dem Aufnahmebehälter gelandete Transportvorrichtung positionsgenau in die Beladeposition zu verschieben. Die in die Eingriffe eingreifenden Schiebeorgane bewegen sich dazu parallel auf dem Aufnahmebehälter, beispielsweise nach rechts oder links auf dem Aufnahmebehälter.

In der Beladeposition bewirkt ein noch weiteres Verschieben der Schiebeorgane zueinander das Zusammendrücken der Rastarme, so dass der Nutzlastbehälter aus der Transportvorrichtung ausrastet und von dieser entfernt werden kann. Durch das weitere Verschieben verringert sich der Abstand der in die Eingriffe eingreifenden Schiebeorgane zueinander.

In einem weiteren Szenario kann ein beispielsweise mit einer anderen Sendung beladener Nutzlastbehälter in der zusammengedrückten Position der Schiebeorgane unterhalb der Transportvorrichtung zwischen den Rastarmen auf dem Aufnahmebehälter bereitgestellt werden. Durch Auseinanderbewegen der Schiebeorgane in die Normalposition greifen die Rastarme in den Nutzlastbehälter ein und verrasten mit diesem. Durch noch weiteres Auseinanderbewegen der Schiebeorgane greift die Positionierungseinrichtung nicht mehr an der Transportvorrichtung an, so dass die Transportvorrichtung von dem Aufnahmebehälter weg zu dem Empfänger der Sendung fliegen kann.

In diesem Zusammenhang ist nach einer bevorzugten Weiterbildung vorgesehen, dass der Aufnahmebehälter eine Ladeeinrichtung aufweist, welche eingerichtet ist, nach dem Zusammendrücken wenigstens einen der Rastarme durch die Positionierungseinrichtung den Nutzlastbehälter durch Absenken desselben von der Transportvorrichtung zu entfernen und/oder den Nutzlastbehälter, bei zusammengedrückter Position der Rastarme, durch Anheben derart an die Transportvorrichtung zu führen, dass der Nutzlastbehälter nach Freigeben der Rastarme aus der zusammengedrückten Position in die Normalposition an den Rastarmen anrastet.

Der Aufnahmebehälter kann eine Luke oder eine Schiebtür aufweisen, durch welche die Ladeeinrichtung den Nutzlastbehälter hin zur Transportvorrichtung führen kann. Zudem kann in dem Aufnahmebehälter eine Türöffnung vorgesehen sein, durch welche ein Sender oder Empfänger der Sendung diese in dem Aufnahmebehälter abstellen oder entnehmen kann. Vorzugsweise ich die Türöffnung und/oder der Aufnahmebehälter ausgestaltet, dass der Sender die Sendung direkt in dem Nutzlastbehälter ablegen kann. Ferner kann innerhalb des Aufnahmebehälters ein Transportsystem installiert sein, welches Sendungen zwischen Ladeeinrichtung und einem Lager transportiert. Die Ladeeinrichtung ist beispielsweise nach Art eines Liftes oder einer Hebebühne ausgestaltet.

Die Transportvorrichtung und/oder der Aufnahmebehälter weisen bevorzugt mechanische und/oder informationstechnologische Einrichtungen auf, die die Transportvorrichtung und/oder den Aufnahmebehälter zum Übergeben der Sendung zwischen Aufnahmebehälter und Transportvorrichtung befähigen. Dazu kann ein Mikroprozessor, eine Steuerungseinrichtung und/oder eine speicherprogrammierte Steuerung vorgesehen sein, welche die Übergabe steuert und/oder über Kommunikationseinrichtungen drahtlos Informationen zwischen der Transportvorrichtung und dem Aufnahmebehälter austauscht.

Nach einer bevorzugten Weiterbildung ist die Positionierungseinrichtung eingerichtet, das Verschieben der Transportvorrichtung und Zusammendrücken der Rastarme einzig durch eine Horizontalbewegung zu bewirken. Der Positionierungseinrichtung kommt eine Doppelfunktion zu, nämlich einerseits durch eine schlichte Horizontalbewegung die Transportvorrichtung auf dem Aufnahmebehälter in der Beladeposition zu positionieren und andererseits ebenso durch die Horizontalbewegung den Nutzlastbehälter aus der Transportvorrichtung auszurasten bzw. mit diesen zu verrasten.

Die Aufgabe der Erfindung wird weiterhin durch ein Verfahren zum Beladen einer auf einem Aufnahmebehälter gelandeten, flugfähigen unbemannten Transportvorrichtung mit einem Nutzlastbehälter für eine Sendung gelöst, mit einer Ladeeinrichtung zum Beladen der Transportvorrichtung mit dem Nutzlastbehälter, wobei die Transportvorrichtung an ihrer Unterseite wenigstens zwei gegenüberliegend angeordnete, jeweils mit einer Federkraft beaufschlagte Rastarme aufweist, oder mit der zuvor beschriebenen Transportvorrichtung, und mit den Schritten:
Verschieben der Transportvorrichtung auf dem Aufnahmebehälter in eine Beladeposition mittels einer Verschiebeeinrichtung,
in der Beladeposition, Ausrasten des Nutzlastbehälters von der Transportvorrichtung durch Zusammendrücken der Rastarme mittels der Verschiebeeinrichtung, und
Absenken des Nutzlastbehälters von der Transportvorrichtung mittels der Ladeeinrichtung.

In bevorzugter Weiterbildung erfolgt das Verschieben der Transportvorrichtung und Zusammendrücken des Nutzlastbehälters einzig durch eine Horizontalbewegung. Weiter bevorzugt umfasst das Verfahren die Schritte: bei zusammengedrückten Rastarmen, Anheben des Nutzlastbehälters mittels der Ladeeinrichtung an die Transportvorrichtung bis in eine Beladeposition, und Freigeben der Rastarme durch die Verschiebeeinrichtung zum Einrasten der Rastarme in den Nutzlastbehälter. Nach einer noch weiter bevorzugten Weiterbildung ist zwischen den Rastarmen eine spannbare Fixierungseinrichtung vorgesehen und das Verfahren umfasst den Schritt: durch Anheben des Nutzlastbehälters in die Beladeposition, Spannen der Fixierungseinrichtung über der Sendung zum Fixieren der Sendung zwischen Fixierungseinrichtung und Nutzlastbehälter.

Bevorzugte Weiterbildungen und Vorteile des Verfahrens ergeben sich dem Fachmann in Analogie zu der zuvor beschriebenen Transportvorrichtung und dem zuvor beschriebenen Aufnahmebehälter.

### Kurze Beschreibung der Zeichnungen

Nachfolgend wird die Erfindung unter Bezugnahme auf die anliegenden Zeichnungen anhand einer bevorzugten Ausführungsform näher erläutert.

In den Zeichnungen zeigen
- Fig. 1: eine Transportvorrichtung mit einem daran verrasteten Nutzlastbehälter in einer schematischen Schnittansicht gemäß einer bevorzugten Ausführungsform,
- Fig. 2: die Transportvorrichtung mit ausgerastetem Nutzlastbehälter in der schematischen Schnittansicht gemäß der bevorzugten Ausführungsform, und
- Fig. 3: die Transportvorrichtung mit davon abgesenktem Nutzlastbehälter in schematischer Schnittansicht gemäß der bevorzugten Ausführungsform.

### Detaillierte Beschreibung einer exemplarischen Ausführungsform

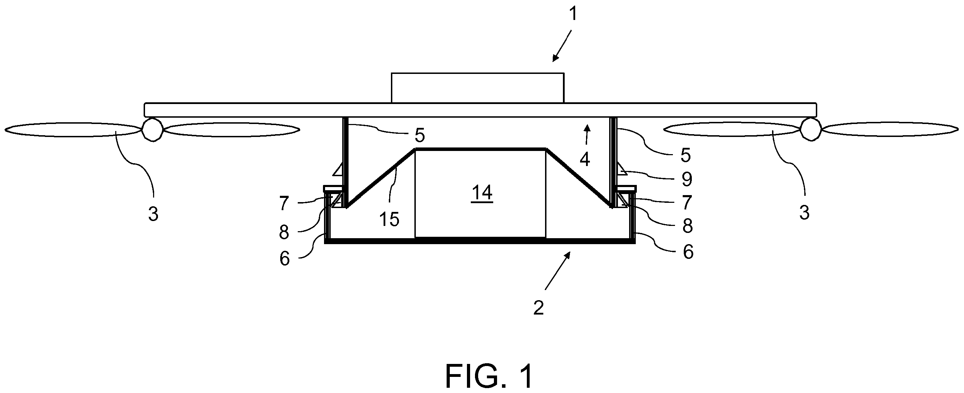

Fig. 1 bis 3 zeigen eine Transportvorrichtung 1 mit einem Nutzlastbehälter 2 gemäß einer bevorzugten Ausführungsform der Erfindung in einer schematischen Schnittansicht. Die Transportvorrichtung ist als sogenannter Paketkopter ausgestaltet und weist zwei gegenüberliegend angeordnete Propeller 3 auf. Die Transportvorrichtung 1 weist ferner informationstechnologische Einrichtungen auf, nicht gezeigt, mittels derer die Transportvorrichtung eigenständig anhand einer definierten Route von einem Sender zu einem Empfänger fliegen kann.

Von einer Unterseite 4 der Transportvorrichtung 1 erstrecken sich mittig und beabstandet zu den beiden Propellern 3 zwei Rastarme 5 senkrecht nach unten weg. Die Rastarme 5 sind rechteckig ausgestaltet, wobei die obere Längsseite an der Unterseite 4 anliegt und die vorderen Querseiten in den Figuren zu sehen sind. Die Rastarme 5 sind einstückig mit der Transportvorrichtung 1 aus einem Kunststoff ausgeführt.

Der Nutzlastbehälter 2 ist als offene Ladeschale mit einem U-förmigem Profil gestaltet, wobei sich von einem Boden des Nutzlastbehälters 2 senkrecht nach oben umlaufende Seitenwände 6 erstrecken. Bei dem in den Figuren gezeigten und nachfolgend näher beschriebenen Zustand erstreckt sich, wenn der Nutzlastbehälter 2 mit der Transportvorrichtung verbunden ist, der Boden Nutzlastbehälters 2 parallel zu der Unterseite 4 der Transportvorrichtung 1.

An den Innenseiten der Seitenwände 6 sind beabstandet vom Boden des Nutzlastbehälters 2 gegenüberliegend erste Rastnasen 7 angeordnet, die sich aufeinander zu in einen Innenraum des Nutzlastbehälters 2 hinein erstrecken. Korrespondierend dazu sind an Außenseiten der beiden Rastarme 5 in einem Endbereich derselben jeweils beabstandet von der Unterseite 4 zweite Rastnasen 8 vorgesehen, die ebenso gegenüberliegend angeordnet sind und sich voneinander weg erstrecken. Der Nutzlastbehälter 2 umgreift im Bereich der Rastnasen 7, 8 die Rastarme 5. Bei der in Fig. 1 gezeigten Darstellung sind die Rastnasen 7, 8 formschlüssig miteinander verrastet und fixieren derart den Nutzlastbehälter 2 an der Transportvorrichtung 1.

An den Außenseiten der Rastarme 8 sind auf gleicher Seite der zweiten Rastnasen 8 oberhalb derselben und beabstandet zu der Unterseite 4 Eingriffe 9 vorgesehen, welche entsprechend gegenüberliegend auf gleicher Höhe an den Rastarmen 5 angeordnet sind und sich voneinander weg erstrecken.

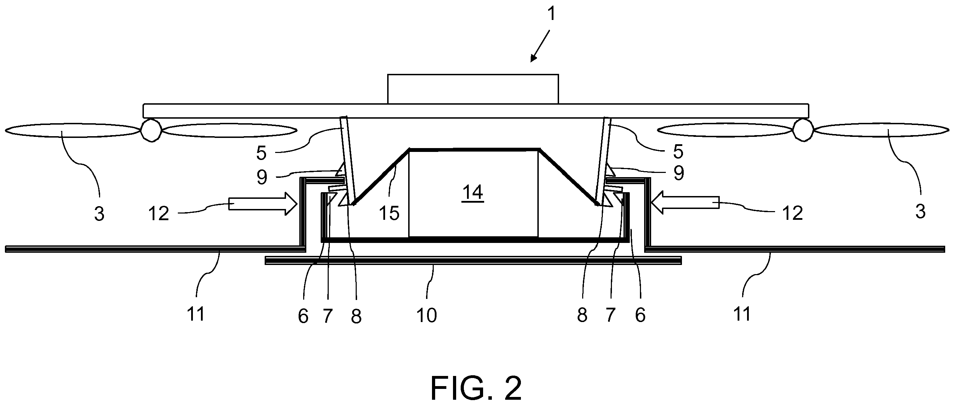

In Fig. 2 ist die Transportvorrichtung 1 auf einem Aufnahmebehälter 10 gelandet, dargestellt als horizontaler Strich 10. Eine an dem Aufnahmebehälter 10 vorgesehene Positionierungseinrichtung 11 greift beidseitig in die Eingriffe 9 ein und verschiebt die Transportvorrichtung 1 auf dem Aufnahmebehälter 10 in eine Beladeposition. Die Positionierungseinrichtung 11 weist zwei gegenüberliegend angeordnete Schieborgane auf, die sich einzig in Horizontalrichtung bewegen und während des Verschiebens, wenn die Schiebeorgane in die Eingriffe 9 berührend eingreifen, einen gleich bleibenden Abstand haben.

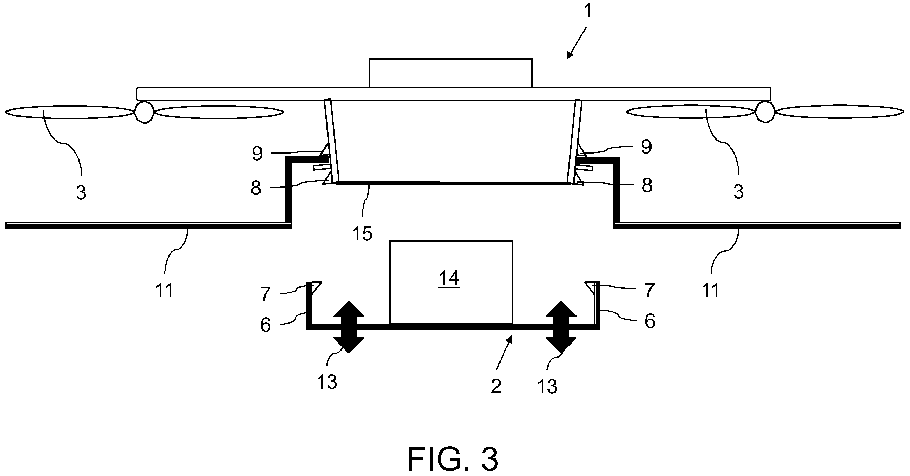

Um in der Beladeposition den Nutzlastbehälter 2 von der Transporteinrichtung 1 zu lösen, bewegen sich die Schiebeorgane in Richtung der Pfeile 12 durch eine weitere Horizontalbewegung aufeinander zu. Derart drückt die Positionierungseinrichtung 11 die Rastarme 5 entgegen einer diese beaufschlagende Federkraft zusammen. Durch das Zusammendrücken rasten die Rastarme 5 aus dem Nutzlastbehälter 2 aus. Konkret rasten die zweiten Rastnasen 8 aus den ersten Rastnasen 7 aus und die formschlüssige Verbindung zwischen Transportvorrichtung 1 und Nutzlastbehälter 2 wird aufgehoben, wie in Fig. 3 gezeigt.

In der Folge kann eine in dem Aufnahmebehälter 10 vorgesehene Ladeeinrichtung, symbolisiert durch Pfeil 13, den derart freigegebenen Nutzlastbehälter 2 durch eine nicht gezeigte Luke oder Schiebetür von der Transportvorrichtung 1 in den Aufnahmebehälter 10 hinein absenken. Nach Öffnen der Schiebetüre kann die Sendung 14 zusammen mit dem Nutzlastbehälter 2 in einen Innenraum des Aufnahmebehälters 10 entladen werden. Die Ladeeinrichtung 13 ist als Lift oder Hebebühne ausgestaltet.

Innerhalb des Aufnahmebehälters 10, welcher beispielsweise als Packstation ausgestaltet ist oder Teil eines Briefkasten oder Lieferwagens ist, kann dann eine auf dem Boden des Nutzlastbehälters 2 vorgesehene Sendung 14 aus dem Nutzlastbehälter 2 entladen werden. Die Sendung 14 ist in dem Aufnahmebehälter 10 zwischenlagerbar und/oder durch einen Empfänger der Sendung 14 abholbar.

Der Nutzlastbehälter 2, gegebenenfalls beladen mit einer anderen Sendung 14, kann ausgehend von der in Fig. 3 gezeigten Position durch die Ladeeinrichtung 13 an die Transportvorrichtung 1 herangeführt werden, bis dass die Sendung 14 in der in Fig. 2 gezeigten Position zwischen den Rastarmen 5 zu liegen kommt. Nach Freigeben der Rastarme 5 aus der in Fig. 2 gezeigten zusammengedrückten Position in eine Normalposition, wie in Fig. 1 gezeigt, in der die Positionierungseinrichtung 11 nicht mehr an der Transportvorrichtung angreift, wird der Nutzlastbehälter 2 mit der Transportvorrichtung 1 verrastet. In der Folge kann die Transportvorrichtung 1 die Sendung 14 einem Empfänger zuführen.

Zum Fixieren der Sendung 14 gegen Verrutschen während eines Flugs der Transportvorrichtung 1 ist zwischen den Rastarmen 5 eine spannbare Fixiereinrichtung 15 vorgesehen, welche an ihren gegenüberliegenden Enden an den Endbereichen der Rastarme 5 im Bereich der zweiten Rastnasen 8 gegenüberliegend zu diesen innenseitig befestigt ist. Die Führungseinrichtung 15 ist als rechteckiges Gepäcknetz ausgestaltet und bei nicht verrastetem Nutzlastbehälter 2 vorgespannt, wie aus Fig. 3 ersichtlich ist.

Durch Anheben des Nutzlastbehälters 2 kommt die Sendung 14 mit ihrer Oberseite in Berührung mit der Fixierungseinrichtung 15, welche die Sendung 14 an dem Nutzlastbehälter 2 fixiert. Bei der in Fig. 1 gezeigten Position des mit der Transportvorrichtung 1 verrastetem Nutzlastbehälter 2 umgreift die Fixiereinrichtung 15 die Sendung 14 oberseitig und sichert die Sendung 14 gegen Verrutschen während des Transports.

Im Ergebnis stellt die Erfindung eine einfache und verlässliche Möglichkeit bereit, einerseits eine auf einem Aufnahmebehälter 10 als Landeplatz mit grober Genauigkeit gelandeten Paketkopter als Transportvorrichtung 1 mittels der Positionierungseinrichtung 11 als linear verschiebbare Mechanik über einer Schiebetür des Aufnahmebehälters 10 als Landeplatz auszurichten. Mit der gleichen Mechanik ist der Formschluss zwischen Nutzlastbehälter 2 und Transportvorrichtung 1 lösbar, so dass der Nutzlastbehälter 2 zusammen mit der Sendung 14 durch die Schiebetür von der Transportvorrichtung 1 entnommen werden kann. In analoger Weise ist ein weiterer Nutzlastbehälter 2 mit einer weiteren Sendung 14 an der Transportvorrichtung 1 befestigbar.

**Bezugszeichenliste**

| | |
|---|---|
| Transportvorrichtung | 1 |
| Nutzlastbehälter | 2 |
| Propeller | 3 |
| Unterseite | 4 |
| Rastarm | 5 |
| Seitenwand | 6 |
| Erste Rastnase | 7 |
| Zweite Rastnase | 8 |
| Eingriff | 9 |
| Aufnahmeeinrichtung | 10 |
| Positionierungseinrichtung | 11 |
| Pfeil | 12 |
| Ladeeinrichtung | 13 |
| Sendung | 14 |
| Fixierungseinrichtung | 15 |

## Patentansprüche

1. Flugfähige, unbemannte Transportvorrichtung (1) mit einem Nutzlastbehälter (2) für wenigstens eine Sendung (14), wobei
die Transportvorrichtung (1) an ihrer Unterseite (4) wenigstens zwei gegenüberliegend angeordnete, jeweils mit einer Federkraft beaufschlagte Rastarme (5) aufweist,
der Nutzlastbehälter (2) an seiner Innenseite wenigstens zwei gegenüberliegend angeordnete, aufeinander zu gerichtete erste Rastnasen (7) aufweist und
die Rastarme (5) korrespondierend zu den wenigstens zwei ersten Rastnasen (7) wenigstens zwei gegenüberliegend angeordnete, voneinander weg gerichtete zweite Rastnasen (8) aufweisen, so dass der Nutzlastbehälter (2) mittels der der Rastarme (5) an der Transportvorrichtung (1) anrastbar ist und durch Zusammendrücken der Rastarme (5) der Nutzlastbehälter (2) von der Transportvorrichtung (1) lösbar ist.

2. Transportvorrichtung (1) nach dem vorhergehenden Anspruch, wobei der Nutzlastbehälter (2) eine umlaufende Seitenwand (6) aufweist und die ersten Rastnasen (7) innenseitig an der Seitenwand (6) angeordnet sind.

3. Transportvorrichtung (1) nach einem der vorhergehenden Ansprüche, wobei die Rastarme (5) und der Nutzlastbehälter (2) ausgeführt sind, miteinander form- und/oder kraftschlüssig zu verrasten.

4. Transportvorrichtung (1) nach einem der vorhergehenden Ansprüche, wobei an den Rastarmes (5) jeweils ein Eingriff (9) vorgesehen ist, die Eingriffe (9) gegenüberliegend zueinander angeordnet sind und sich voneinander weg erstrecken.

5. Transportvorrichtung (1) nach einem der vorhergehenden Ansprüche, mit der Sendung (14) und einer zwischen den Rastarmen (5) vorgesehenen, spannbare Fixierungseinrichtung (15), welche angeordnet und eingerichtet ist, beim Einsetzen des mit der Sendung (14) beladenen Nutzlastbehälters (2) in die Transportvorrichtung (1) die Sendung (14) zwischen Nutzlastbehälter (2) und Fixierungseinrichtung (15) zu fixieren.

6. Transportvorrichtung (1) nach dem vorhergehenden Anspruch, wobei die Fixierungseinrichtung (15) als Netz, als Gepäcknetz, als Plane, als Gummifolie und/oder als Gummiband ausgeführt ist und/oder der Nutzlastbehälter (2) als Ladeschale oder Transportschale ausgeführt ist, in welche die Sendung (14) einsetzbar ist.

7. Aufnahmebehälter (10) für eine Transportvorrichtung (1), mit der Transportvorrichtung (1) gemäß einem der vorhergehenden Ansprüche, wobei der Aufnahmebehälter (10) eine Positionierungseinrichtung (11) aufweist, welche eingerichtet ist, die an dem Aufnahmebehälter (10) gelandete Transportvorrichtung (1) zunächst in eine Beladeposition zu verschieben und daraufhin wenigstens einen der Rastarme (5) zusammen zu drücken und/oder die Rastarme (5) aus einer zusammengedrückten Position in eine Normalposition zu überführen, in der die Positionierungseinrichtung (11) nicht mehr an der Transportvorrichtung (1) angreift.

8. Aufnahmebehälter (10) nach dem vorgehenden Anspruch, wobei der Aufnahmebehälter (10) eine Ladeinrichtung (13) aufweist, welche eingerichtet ist, nach dem Zusammendrücken wenigstens einer der Rastarme (5) durch die Positionierungseinrichtung (11) den Nutzlastbehälter (2) durch Absenken desselben von der Transportvorrichtung (1) zu entfernen und/oder den Nutzlastbehälter (2), bei zusammengedrückter Position der Rastarme (5), durch Anheben derart an die Transportvorrichtung (1) zu führen, dass der Nutzlastbehälter (2), nach Freigeben der Rastarme (5) aus der zusammengedrückten Position in die Normalposition, an den Rastarmes (5) anrastet.

9. Aufnahmebehälter (10) nach einem der beiden vorgehenden Ansprüche, wobei die Positionierungseinrichtung (11) eingerichtet ist, das Verschieben der Transportvorrichtung (1) und Zusammendrücken der Rastarme (5) einzig durch eine Horizontalbewegung zu bewirken.

10. Verfahren zum Beladen einer auf einem Aufnahmebehälter (10) gelandeten, flugfähigen unbemannten Transportvorrichtung (1) mit der Transportvorrichtung (1) gemäß einem der vorhergehenden Ansprüche 1 bis 6, mit den Schritten:
Verschieben der Transportvorrichtung (1) auf dem Aufnahmebehälter (10) in eine Beladeposition mittels einer Positionierungseinrichtung (11),
in der Beladeposition, Ausrasten des Nutzlastbehälters (2) von der Transportvorrichtung (1) durch Zusammendrücken der Rastarme (5) mittels der Positionierungseinrichtung (11), und
Absenken des Nutzlastbehälters (2) von der Transportvorrichtung (1) mittels der Ladeeinrichtung.

11. Verfahren nach dem vorhergehenden Verfahrensanspruch, wobei das Verschieben und Zusammendrücken einzig durch eine Horizontalbewegung erfolgt.

12. Verfahren nach einem der vorhergehenden Verfahrensansprüche, mit den Schritten:
bei zusammengedrückten Rastarmes (5), Anheben des Nutzlastbehälters (2) mittels der Ladeeinrichtung an die Transportvorrichtung (1) bis in eine Beladeposition, und
Freigeben der Rastarme (5) durch die Positionierungseinrichtung (11) zum Einrasten der Rastarme (5) in den Nutzlastbehälter (2).

13. Verfahren nach dem vorhergehenden Verfahrensanspruch, wobei zwischen den Rastarmes (5) eine spannbare Fixierungseinrichtung (15) vorgesehen ist und dem Schritt:
durch Anheben des Nutzlastbehälter (2) in die Beladeposition, Spannen der Fixierungseinrichtung (15) über der Sendung (14) zum Fixieren der Sendung (14) zwischen Fixierungseinrichtung (15) und Nutzlastbehälter (2).

## Claims

1. Unmanned aerial transporter (1) having a payload container (2) for at least one consignment (14), wherein
the transporter (1), on its underside (4), has at least two mutually opposite latching arms (5), each subjected to a spring force,
the payload container (2), on its inner side, has at least two mutually opposite first latching noses (7), which are directed towards one another, and,
in a manner corresponding to the at least two first latching noses (7), the latching arms (5) have at least two mutually opposite second latching noses (8), which are directed away from one another, and therefore the payload container (2) can be latched on the transporter (1) by means of the of the latching arms (5) and, by virtue of the latching arms (5) being pushed together, the payload container (2) can be released from the transporter (1).

2. Transporter (1) according to the preceding claim, wherein the payload container (2) has a surrounding side wall (6) and the first latching noses (7) are arranged on the inner side of the side wall (6).

3. Transporter (1) according to either of the preceding claims, wherein the latching arms (5) and the payload container (2) are designed to latch to one another in a form-fitting and/or force-fitting manner.

4. Transporter (1) according to one of the preceding claims, wherein a respective engagement means (9) is provided on the latching arms (5), the engagement means (9) being arranged oppositely to one another and extending away from one another.

5. Transporter (1) according to one of the preceding claims, having the consignment (14) and a tensionable fixing device (15), which is provided between the latching arms (5) and is arranged, and designed, so that, when the payload container (2) loaded with the consignment (14) is inserted into the transporter (1), the fixing device fixes the consignment (14) between the payload container (2) and fixing device (15).

6. Transporter (1) according to the preceding claim, wherein the fixing device (15) is designed in the form of a net, of a luggage net, of a tarpaulin, of a rubber sheet and/or of a rubber band, and/or the payload container (2) is designed in the form of a loading tray or transporting tray, into which the consignment (14) can be inserted.

7. Accommodating container (10) for a transporter (1), use being made of the transporter (1) according to one of the preceding claims, wherein the accommodating container (10) has a positioning device (11), by means of which first of all the transporter (1), once landed on the accommodating container (10), is displaced into a loading position and then at least one of the latching arms (5) is pushed together and/or the latching arms (5) are transferred from a pushed-together position into a normal position, in which the positioning device (11) no longer acts on the transporter (1).

8. Accommodating container (10) according to the preceding claim, wherein the accommodating device (10) has a loading device (13), by means of which, once at least one of the latching arms (5) has been pushed together by the positioning device (11), the payload container (2) is removed from the transporter (1) by virtue of being lowered and/or, in the pushed-together position of the latching arms (5), the payload container (2) is guided onto the transporter (1) by virtue of being raised, such that, once the latching arms (5) have been freed from the pushed-together position into the normal position, the payload container (2) latches on the latching arms (5).

9. Accommodating container (10) according to either of the two preceding claims, wherein the positioning device (11) is designed so that the transporter (1) is displaced, and the latching arms (5) are pushed together, solely as a result of the horizontal movement.

10. Method for loading an unmanned aerial transporter (1) landed on an accommodating container (10), use being made of the transporter (1) according to one of preceding Claims 1 to 6, the method having the following steps:
displacing the transporter (1) on the accommodating container (10) into a loading position by means of a positioning device (11),
in the loading position, unlatching the payload container (2) from the transporter (1) by virtue of the latching arms (5) being pushed together by means of the positioning device (11), and
lowering the payload container (2) from the transporter (1) by means of the loading device.

11. Method according to the preceding method claim, wherein the displacement and pushing-together operations take place solely as a result of a horizontal movement.

12. Method according to either of the preceding method claims, having the following steps:
with the latching arms (5) pushed together, using the loading device to raise the payload container (2) onto the transporter (1), into a loading position, and
freeing the latching arms (5) by the positioning device (11) in order for the latching arms (5) to latch into the payload container (2).

13. Method according to the preceding method claim, wherein a tensionable fixing device (15) is provided between the latching arms (5), and having the following method step:
by virtue of the payload container (2) being raised into the loading position, tensioning the fixing device (15) over the consignment (14) in order to fix the consignment (14) between the fixing device (15) and payload container (2).

## Revendications

1. Dispositif de transport sans pilote (1) apte à voler, comprenant un contenant de charge utile (2) pour au moins un envoi (14), dans lequel
le dispositif de transport (1) comprend, sur son côté inférieur (4), au moins deux bras d'encliquetage (5) soumis respectivement à une force élastique et se faisant face,
le contenant de charge utile (2) comprend, sur son côté intérieur, au moins deux premiers ergots d'encliquetage (7) se faisant face et orientés les uns vers les autres et
les bras d'encliquetage (5) comprennent, de manière correspondante auxdits au moins deux premiers ergots d'encliquetage (7), au moins deux deuxièmes ergots d'encliquetage (8) se faisant face et orientés à l'écart les uns des autres, de telle sorte que le contenant de charge utile (2) puisse être encliqueté sur le dispositif de transport (1) au moyen des des bras d'encliquetage (5) et que le contenant de charge utile (2) puisse être détaché du dispositif de transport (1) par compression des bras d'encliquetage (5).

2. Dispositif de transport (1) selon la revendication précédente, dans lequel le contenant de charge utile (2) comprend une paroi latérale périphérique (6) et les premiers ergots d'encliquetage (7) sont disposés sur la paroi latérale (6) du côté intérieur.

3. Dispositif de transport (1) selon l'une des revendications précédentes, dans lequel les bras d'encliquetage (5) et le contenant de charge utile (2) sont réalisés de manière à s'encliqueter les uns avec les autres par complémentarité de forme et/ou par force.

4. Dispositif de transport (1) selon l'une des revendications précédentes, dans lequel un moyen d'entrée en prise (9) est respectivement prévu sur les bras d'encliquetage (5), les moyens d'entrée en prise (9) sont disposés en regard les uns des autres et s'étendent à l'écart les uns des autres.

5. Dispositif de transport (1) selon l'une des revendications précédentes, comprenant l'envoi (14) et un dispositif de fixation (15) pouvant être tendu et prévu entre les bras d'encliquetage (5), lequel est disposé et conçu pour fixer l'envoi (14) entre le contenant de charge utile (2) et le dispositif de fixation (15) lors de l'insertion, dans le dispositif de transport (1), du contenant de charge utile (2) chargé de l'envoi (14).

6. Dispositif de transport (1) selon la revendication précédente, dans lequel le dispositif de fixation (15) est réalisé sous forme de filet, de filet à bagages, de bâche, de feuille de caoutchouc et/ou de bande de caoutchouc, et/ou le contenant de charge utile (2) est réalisé sous forme de bac de chargement ou de bac de transport dans lequel l'envoi (14) peut être inséré.

7. Contenant de réception (10) pour un dispositif de transport (1), avec le dispositif de transport (1) selon l'une des revendications précédentes, dans lequel le contenant de réception (10) comprend un dispositif de positionnement (11), lequel est conçu pour tout d'abord déplacer, dans une position de chargement, le dispositif de transport (1) ayant atterri sur le contenant de réception (10) puis pour comprimer au moins l'un des bras d'encliquetage (5) et/ou pour faire passer les bras d'encliquetage (5) d'une position comprimée à une position normale dans laquelle le dispositif de positionnement (11) n'agit plus sur le dispositif de transport (1).

8. Contenant de réception (10) selon la revendication précédente, le contenant de réception (10) comprenant un dispositif de chargement (13), lequel est conçu pour, après la compression d'au moins l'un des bras d'encliquetage (5) par le dispositif de positionnement (11), retirer le contenant de charge utile (2) du dispositif de transport (1) par abaissement du contenant de charge utile et/ou pour guider le contenant de charge utile (2) sur le dispositif de transport (1) par soulèvement dans la position comprimée des bras d'encliquetage (5), de telle sorte que le contenant de charge utile (2) s'encliquète sur les bras d'encliquetage (5) après la libération des bras d'encliquetage (5) de la position comprimée à la position normale.

9. Contenant de réception (10) selon l'une des deux revendications précédentes, dans lequel le dispositif de positionnement (11) est conçu pour provoquer le déplacement du dispositif de transport (1) et la compression des bras d'encliquetage (5) uniquement par un mouvement horizontal.

10. Procédé de chargement d'un dispositif de transport sans pilote (1) apte à voler ayant atterri sur un contenant de réception (10) avec le dispositif de transport (1) selon l'une des revendications précédentes 1 à 6, comprenant les étapes de :
déplacement du dispositif de transport (1) sur le contenant de réception (10) dans une position de chargement au moyen d'un dispositif de positionnement (11),
dans la position de chargement, désencliquetage du contenant de charge utile (2) du dispositif de transport (1) par compression des bras d'encliquetage (5) au moyen du dispositif de positionnement (11) et
abaissement du contenant de charge utile (2) à partir du dispositif de transport (1) au moyen du dispositif de chargement.

11. Procédé selon la revendication de procédé précédente, dans lequel le déplacement et la compression s'effectuent uniquement par un mouvement horizontal.

12. Procédé selon l'une des revendications de procédé précédentes, comprenant les étapes de :
lorsque les bras d'encliquetage (5) sont comprimés, soulèvement du contenant de charge utile (2) au moyen du dispositif de chargement sur le dispositif de transport (1) jusqu'à une position de chargement et
libération des bras d'encliquetage (5) par le dispositif de positionnement (11) pour l'encliquetage des bras d'encliquetage (5) dans le contenant de charge utile (2) .

13. Procédé selon la revendication de procédé précédente, dans lequel un dispositif de fixation (15) pouvant être tendu est prévu entre les bras d'encliquetage (5), et comprenant l'étape de :
par soulèvement du contenant de charge utile (2) dans la position de chargement, tension du dispositif de fixation (15) au-dessus de l'envoi (14) pour fixer l'envoi (14) entre le dispositif de fixation (15) et le contenant de charge utile (2).
